Europäisches Patentamt

European Patent Office

Office européen des brevets

(11) Veröffentlichungsnummer: **0 114 992**
**A2**

(12) # EUROPÄISCHE PATENTANMELDUNG

(21) Anmeldenummer: **83112553.9**

(22) Anmeldetag: **14.12.83**

(51) Int. Cl.³: **B 60 G 5/04**

(30) Priorität: **01.02.83 DE 3303255**
**26.03.83 DE 3311114**

(43) Veröffentlichungstag der Anmeldung:
**08.08.84 Patentblatt 84/32**

(84) Benannte Vertragsstaaten:
**AT BE CH FR GB LI NL**

(71) Anmelder: **Otto Sauer Achsenfabrik Keilberg**
**Hauptstrasse 26**
**D-8751 Bessenbach-Keilberg(DE)**

(72) Erfinder: **Schaeff, Friedrich**
**Am Höllberg 19**
**D-6140 Bensheim(DE)**

(72) Erfinder: **Henrich, Gert**
**An den Eichgärten 10**
**D-8751 Bessenbach 2(DE)**

(74) Vertreter: **Keil, Rainer A., Dipl.-Phys. Dr. et al,**
**Patentanwälte KEIL & SCHAAFHAUSEN**
**Ammelburgstrasse 34**
**D-6000 Frankfurt am Main 1(DE)**

(54) **Mehrachsaggregat für Fahrzeuge.**

(57) Die Erfindung bezieht sich auf ein Mehrachsaggregat für Fahrzeuge, mit einer Verbindung von mindestens zwei Achsen in Form einer Ausgleichsschwinge für den statischen und dynamischen Achsausgleich sowie zum Bremsausgleich. Zur Verbesserung der Fahreigenschaften ist vorgesehen, daß die jeweilige Ausgleichsschwinge nachgiebig federnd ausgebildet ist.

FIG.1

Fahrtrichtung

EP 0 114 992 A2

S 19 P 57 EP

Otto Sauer Achsenfabrik Keilberg

8751 Bessenbach-Keilberg

Mehrachsaggregat für Fahrzeuge

Beschreibung:

Die Erfindung bezieht sich auf ein Mehrachsaggregat für Fahrzeuge mit einer Verbindung von mindestens zwei Achsen in Form
einer Ausgleichsschwinge für den statischen und dynamischen
Achsausgleich sowie zum Bremsausgleich.

Bei einem solchen bekannten Zwei-Achs-Aggregat wird zwar mit
Hilfe einer Ausgleichsschwinge ein gewisser Achslastausgleich
gewährleistet. Die Ausgleichsschwingen sind bisher starr
ausgebildet, und zwar entweder als Gußteil oder als Schweißkonstruktion. Der Fahrkomfort von Zwei-Achs-Aggregaten ist
daher beschränkt. Nach neuer gesetzlicher Regelung besteht
die Möglichkeit Drei-Achs-Aggregate so zu bauen, daß bei
einem Abstand der ersten zur dritten Achse von nicht größer
als 2300 mm die Lenkachse entfallen kann, also drei starre
Achsen verwendbar sind. Bei einem solchen Drei-Achs-Aggregat
ergibt sich mit starren Ausgleichsschwingen der Nachteil, daß
durch die stark verkürzten Stützweiten der Federn und der
Ausgleichsschwingen der Feder- und der Ausgleichsweg erheblich
reduziert ist. Dies führt nicht nur ebenfalls zu schlechten Fahreigenschaften, sondern auch zu erheblichen Achsüberlastungen sowie zu einer ungenauen Regelung der lastabhängigen Bremse und deren mechanischen Ventile.

Aufgabe der vorliegenden Erfindung ist es daher, ein Achsaggregat vorzuschlagen, welches bessere Fahreigenschaften hat
und bei welchem insbesondere die zuvor genannten Nachteile
vermieden sind.

Diese Aufgabe wird erfindungsgemäß dadurch gelöst, daß die
Ausgleichsschwinge nachgiebig federnd ausgebildet ist.

Bei Verwirklichung des Erfindungsgedankens werden daher,
soweit Achsfedern vorhanden sind, nicht nur die auf den
jeweiligen Achsen befindlichen Achsfedern zur Federung herangezogen, sondern auch die Ausgleichsschwingen als federnde
Elemente. Die Federeigenschaften der Ausgleichsschwingen
können dabei durch verschiedene, eventuell auch kombinierte
Maßnahmen erzielt werden, nämlich durch die Art des verwendeten Materials, die Art der Einspannung und die Dimensionierung hinsichtlich Formgebung, Länge und Querschnitt der
Ausgleichsschwingen. Es ist auch möglich, in sich starre
Einzelteile zu einer insgesamt nachgiebig federnden Ausgleichsschwinge miteinander zu verbinden. Nach der erfindungsgemäßen Lösung werden die Fahreigenschaften insbesondere
dadurch verbessert, daß sowohl beim Überfahren von Bodenunebenheiten als auch beim Bremsvorgang die den Achsen im
statischen Zustand zugeordneten Achslasten beibehalten werden.

Die jeweilige Ausgleichsschwinge kann in an sich bekannter
Weise entweder die Vorderenden oder die Hinterenden der Achsfedern benachbarter Achsen miteinander verbinden.

Gemäß dem Erfindungsvorschlag verbindet ferner bei einem Drei-Achs-Aggregat gemäß einer Ausführungsform vorteilhafterweise eine Ausgleichsschwinge das Vorderende der Achsfeder der vorderen Achse mit dem Vorderende der Achsfeder der mittleren Achse und eine Ausgleichsschwinge das Hinterende der Achsfeder der mittleren Achse mit dem Hinterende der Achsfeder der hinteren Achse. Auf diese Weise kann der gesamte Federweg erheblich erhöht und die lastabhängig gesteuerte Bremse wesentlich genauer geregelt werden. Durch die Verbindung der in Fahrtrichtung vorne liegenden Federenden der ersten und zweiten Achse durch die federnden Ausgleichsschwingen links und rechts und die Verbindung der hinteren Federenden der zweiten und dritten Achse durch gleichermaßen federnde Ausgleichsschwingen links und rechts ist auch bei einem solchen Trio-Aggregat ein statischer und dynamischer Achslastausgleich sowie ein solcher Achslastausgleich beim Bremsvorgang gewährleistet. Die langen, dem Radstand entsprechenden federnden Ausgleichsschwingen ermöglichen einen großen Ausgleichsweg. Die Federwege der auf den jeweiligen Achsen angeordneten Federn und der Federschwingen addieren sich, so daß auch beim Überfahren größerer Bodenunebenheiten keine wesentlichen Achslastverlagerungen auftreten.

Die langen Ausgleichsschwingen erlauben neben einer symmetrischen Ausführung auch eine asymmetrische, so daß Aggregate mit unterschiedlichen Achslasten gebaut werden können. Z.B. ist es bei einem Trio-Aggregat günstig, die vordere und die hintere Achse weniger zu belasten als die mittlere. Dadurch ergibt sich ein besserer Kurvenlauf und ein geringerer Reifenverschleiß der ersten und der dritten Achse. Auf diese Weise wird der Reifenverschleiß nach der Erfindung an allen Achsen etwa gleich. Dies kann durch eine entsprechende Einspannung der Ausgleichsschwingen in an dem Fahrzeugrahmen befestigbaren Halteböcken erreicht werden.

KEIL & SCHAAFHAUSEN
PATENTANWÄLTE

- 4 -

Die Achsführung erfolgt vorzugsweise über die Vorderenden der Achsfedern mit Federaugen. Die Achsführung kann aber auch über die Vorderenden der Achsfedern und gesonderter gegebenenfalls längenverstellbarer Achslenker erfolgen.

Gemäß einer Weiterbildung des Erfindungsgedankens nimmt der jeweilige Haltebock ein Ende einer Achsfeder auf und unterhalb der Achsfeder ist ein Bolzen als Fangvorrichtung vorgesehen, die bei Vertikalverladung des mit dem Achsaggregat ausgerüsteten Fahrzeugs in Funktion tritt.

Gemäß einem weiteren Lösungsgedanken der Erfindung ist bei einem Zwei-Achs-Aggregat die Ausgleichsschwinge mit ihrem Vorderende an einem mit der vorderen Achse verbundenen Achsbock und mit ihrem Hinterende an dem Vorderende der Achsfeder der hinteren Achse angelenkt und zwischen Achsbock und einem an dem Fahrzeugrahmen befestigbaren Haltebock ist ein gegebenenenfalls längenverstellbarer Achslenker angeordnet. Ebenso kann bei einem Drei-Achs-Aggregat die vordere Ausgleichsschwinge mit ihrem Vorderende an einem mit der vorderen Achse verbundenen Achsbock und an ihrem Hinterende das Vorderende der Achsfeder der mittleren Achse angelenkt sein, die hintere Ausgleichsschwinge mit ihrem Vorderende an der Achsfeder der mittleren Achse und mit ihrem Hinterende an einem mit der hinteren Achse verbundenen Achsbock angebracht sein und zwischen den jeweiligen Achsböcken und je einem an dem Fahrzeugrahmen befestigbaren Haltebock ein gegebenenfalls längenverstellbarer Achslenker angeordnet sein. Bei einer solchen Ausgestaltung kann die Achsfeder bei dem Zwei-Achs-Aggregat an der vorderen Achse und bei dem Drei-Achs-Aggregat an der ersten und der letzten Achse entfallen.

Ferner kann es zweckmäßig sein, daß der jeweilige Haltebock
beidseitig der jeweiligen Ausgleichsschwinge Gleitplatten zur
Aufnahme von Seitenkräften aufweist. Die Aufnahme von Seitenkräften kann noch dadurch unterstützt werden, daß die jeweilige Ausgleichsschwinge im Abstand von dem jeweiligen Haltebock zwischen Scheuerplatten aufgenommen ist.

Für eine einfache Montage sind die Ausgleichsschwingen bei
einer besonderen Ausgestaltung der Erfindung über Gehäuse mit
den betreffenden Enden der Achsfedern verbunden.

Die Achsfedern können auch unter der Achse angeordnet sein.

Weitere Ziele, Merkmale, Vorteile und Anwendungsmöglichkeiten
der vorliegenden Erfindung ergeben sich aus der nachfolgenden
Beschreibung von Ausführungsbeispielen anhand der beiliegenden
Zeichnungen. Dabei bilden alle beschriebenen und/oder bildlich
dargestellten Merkmale für sich oder in beliebiger sinnvoller
Kombination den Gegenstand der vorliegenden Erfindung, auch
unabhängig von ihrer Zusammenfassung in den Ansprüchen oder
deren Rückbeziehung.

Es zeigt:

Fig. 1     ein Doppelachsaggregat mit einer Ausgleichsschwinge
           zwischen den in Fahrtrichtung vorne angeordneten
           Federenden gemäß einer ersten Ausführungsform der
           Erfindung,

Fig. 2     ein Doppelachsaggregat mit einer Ausgleichsschwinge
           zwischen den in Fahrtrichtung hinten liegenden
           Federenden gemäß einer zweiten Ausführungsform der
           Erfindung,

- 6 -

Fig. 3    ein Drei-Achs-Aggregat mit asymmetrischer Einspannung der Ausgleichsschwingen,

Fig. 4    ein Drei-Achs-Aggregat mit symmetrischer Einspannung der Ausgleichsschwingen,

Fig. 5    ein Drei-Achs-Aggregat, bei dem die Achsanlenkung (Achsführung) über separate Achslenker erfolgt, und

Fig. 6    ein erfindungsgemäßes Drei-Achs-Aggregat gemäß einer anderen Ausführungsform, und

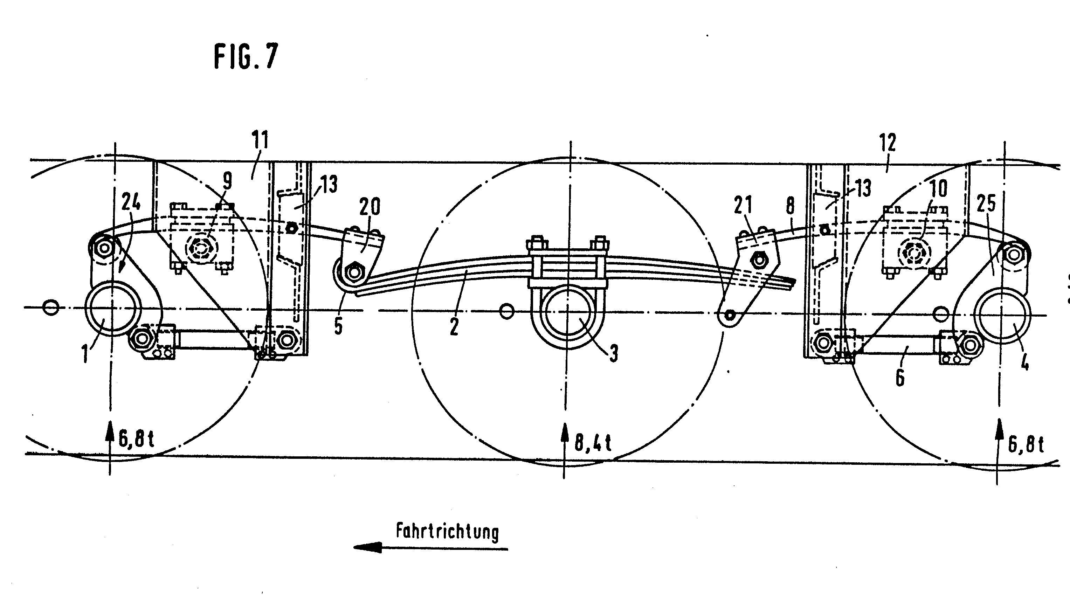

Fig. 7    ein Drei-Achs-Aggregat gemäß Fig. 2, jedoch mit unsymmetrischer Einspannung der Ausgleichsschwingen.

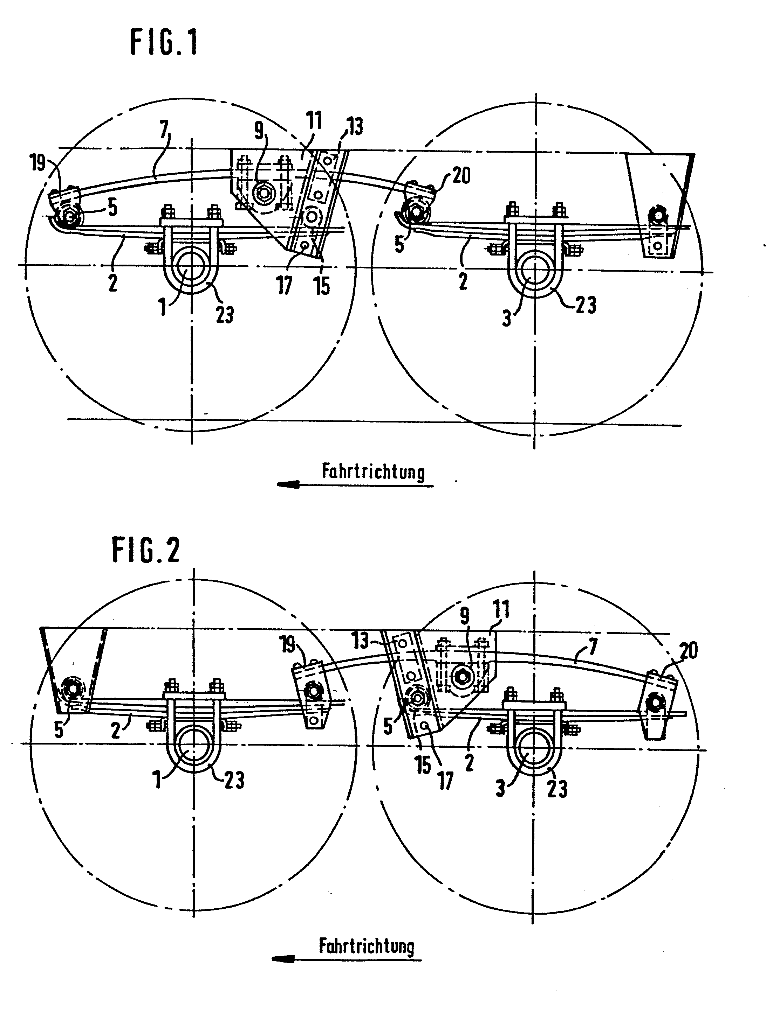

Bei dem in Fig. 1 veranschaulichten Doppelachsaggregat sind die beiden Achsen 1 und 3 je mit einer darüberliegenden Achsfeder 2 verbunden. Die Verbindung erfolgt mit Hilfe einer Einspannvorrichtung 23, die eine Horizontalverstellung der jeweiligen Achse 1, 3 gestattet. Die vorderen Federenden haben ein Federauge 5 mit einer Lagerung. Eine federnde Ausgleichsschwinge 7 verbindet die in Fahrtrichtung vorderen Enden der Achsfedern 2 der ersten Achse 1 und der zweiten Achse 3. Die federnde Ausgleichsschwinge 7 ist im mittleren Bereich, im dargestellten Falle unsymmetrisch zu den Verbindungspunkten mit den Achsfedern 2 (der vordere Abschnitt ist länger), in einem Lagergehäuse 9 eingespannt und über die zugehörige Lagerstelle mit einem an dem Fahrzeugrahmen zu befestigenden Haltebock 11 verbunden. Der Haltebock 11 überträgt die Aggregatlast zum Fahrzeugrahmen hin. Der Haltebock 11 hat beidseitig der von ihm aufgenommenen Ausgleichsschwinge 7 Gleitplatten 13 zur Übernahme von Seitenkräften. In dem Haltebock 11 ist ferner unterhalb der Federauflage 15 ein Bolzen 17 als Fangvorrichtung bei Vertikalverladung des Fahrzeuges vorgesehen.

Das Doppelachsaggregat gemäß Fig. 2 unterscheidet sich von dem in Fig. 1 dargestellten lediglich dadurch, daß die beiden Hinterenden der Achsfedern 2 über die Ausgleichsschwinge 7 miteinander verbunden sind. Auch hier ist die Schwinge unsymmetrisch in dem Haltebock 11 eingespannt, wobei der hintere Abschnitt länger ist als der vordere.

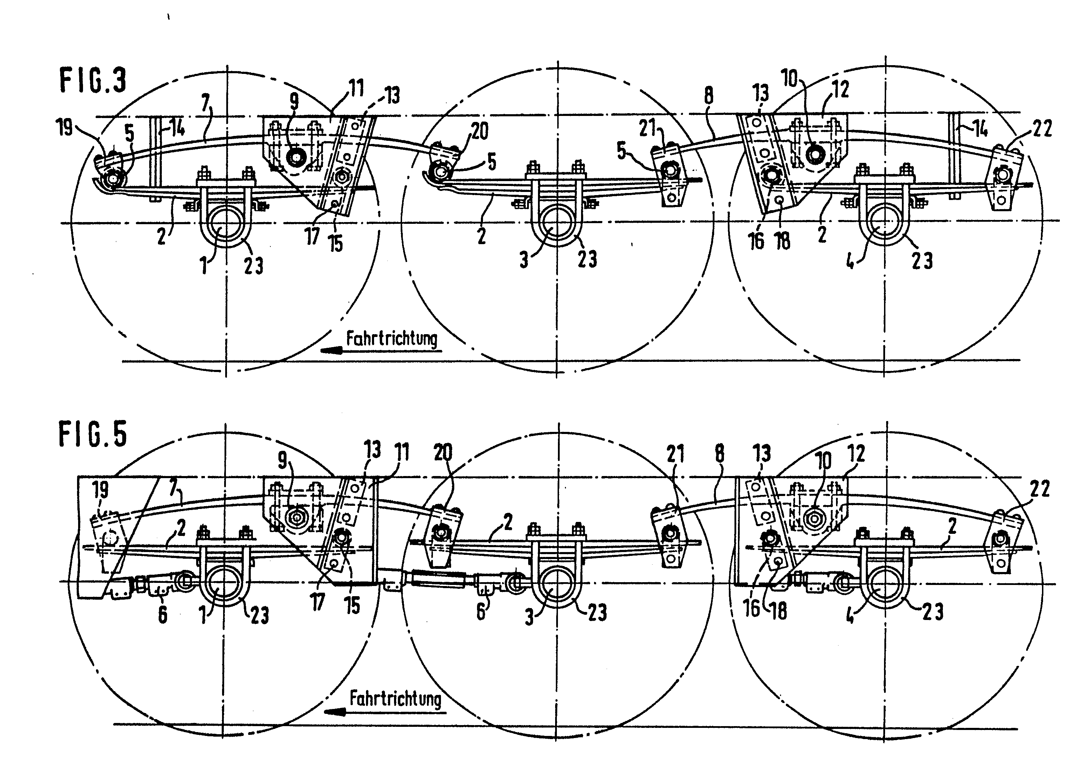

Bei dem Drei-Achs-Aggregat gemäß Fig. 3 sind sowohl die Vorder enden der Achsfedern 2 der ersten Achse 1 und der mittleren Achse 3 als auch die Hinterenden der Achsfedern 2 der mittleren Achse 3 und der hinteren Achse 4 über federnde Ausgleichsschwingen 7 bzw. 8 miteinander verbunden. Im übrigen ist der Aufbau analog zu den in den Fig. 1 und 2 dargestellten Achsaggregaten. Die Ausgleichsschwingen 7 und 8 sind unsymmetrisch in Halteböcken 11, 12 eingespannt, wobei der vordere Abschnitt der vorderen Ausgleichsschwinge 7 und der hintere Abschnitt der hinteren Ausgleichsschwinge 8 länger ist als der zugehörige hintere oder vordere. Der hintere Haltebock 12 hat ein Lagergehäuse 10. Die Verbindung der Ausgleichsschwinge 8 mit dem Hinterende der Achsfeder 2 der mittleren Achse 3 als auch die Verbindung der Ausgleichsschwinge 8 mit dem Hinterende der Achsfeder 2 der hinteren Achse 4 erfolgt über Gehäuse 21 bzw. 22. Zusätzlich befinden sich beidseitig der Ausgleichsschwingen 7 und 8 im Abstand vor bzw. hinter den Halteböcken 11 bzw. 12 Scheuerbleche 14 zur zusätzlichen Aufnahme von Seitenkräften.

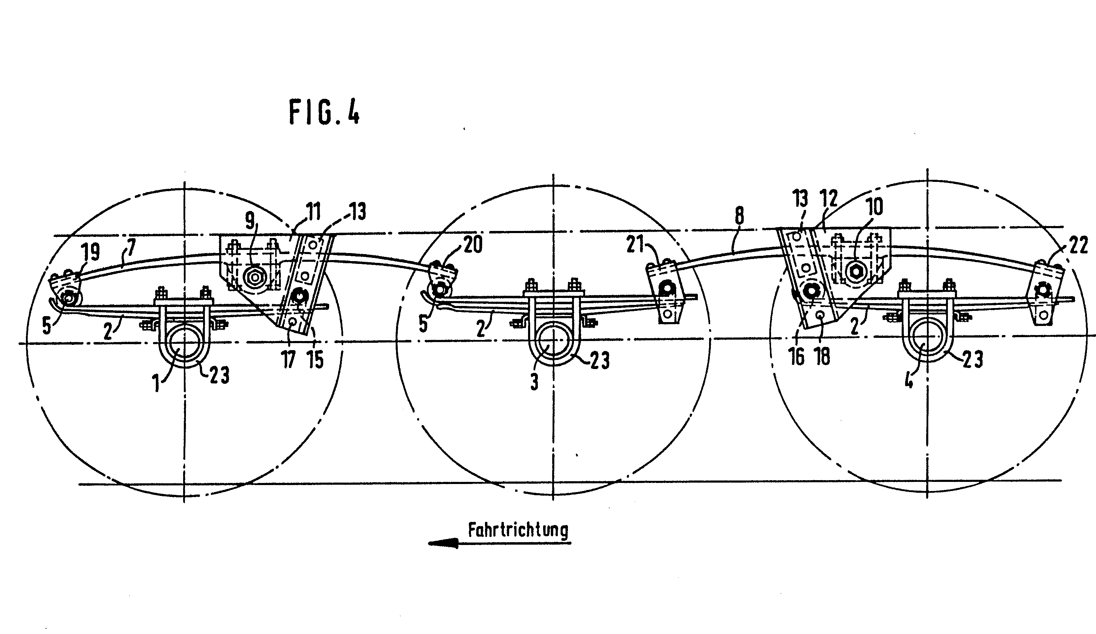

Das Drei-Achs-Aggregat gemäß Fig. 4 entspricht demjenigen von Fig. 3 mit dem Unterschied, daß die Einspannung der Ausgleichsschwingen 7 und 8 symmetrisch ist.

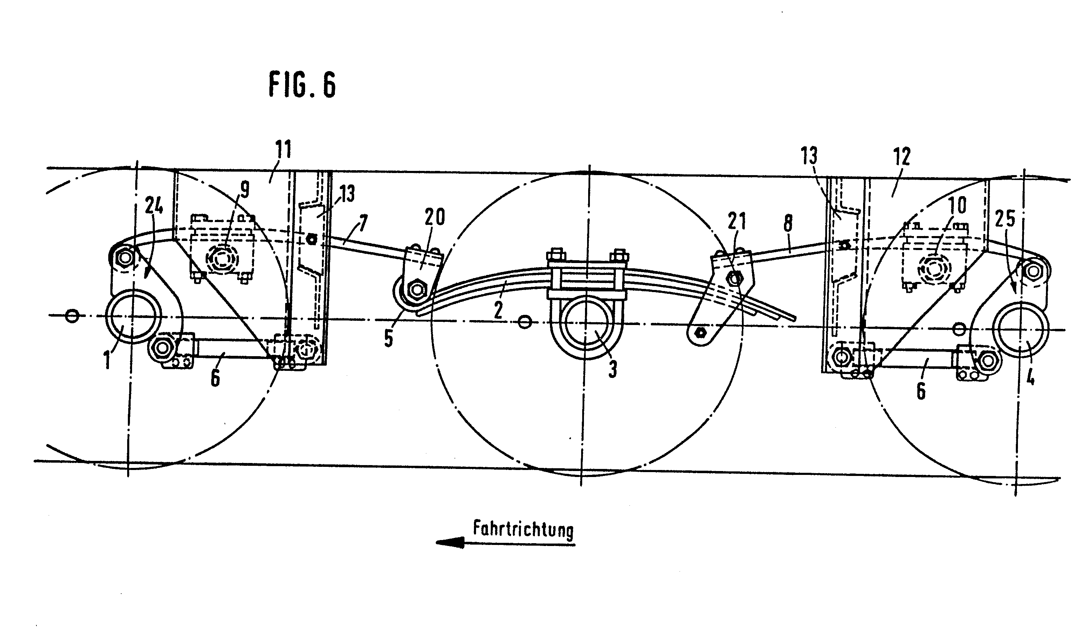

Während bei den bisher veranschaulichten Achsaggregaten die Achsführung über die Vorderenden der Achsfedern 2 mit Federaugen 5 erfolgt, sind hierzu bei der Ausgestaltung gemäß Fig.
5 gesonderte Achslenker 6 vorgesehen. Für den Achslenker 6
der ersten Achse 1 ist ein zusätzlicher Haltebock vorgesehen,
in dem auch das Vorderende der Achsfeder 2 liegt. An dem das
Vorderende der Achsfeder 2 der letzten Achse 4 aufnehmenden
Haltebock 12 ist unterhalb der Federauflage 16 ein Bolzen 18
als Fangvorrichtung vorgesehen. Der Achslenker 6 der mittleren Achse 3 ist mit seinem Vorderende an dem Haltebock 11
der ersten Achse 1 angebracht. Im übrigen entspricht das
Drei-Achs-Aggregat gemäß Fig. 5 dem in Fig. 3 dargestellten,
jedoch ohne zusätzliche Scheuerbleche 14.

Fig. 6 veranschaulicht eine weitere Ausgestaltung des Erfindungsgedankens anhand eines Drei-Achs-Aggregates, bei welcher
bei der ersten Achse 1 und der letzten Achse 4 auf Achsfedern
verzichtet werden kann. Die vordere Ausgleichsschwinge 7 ist
mit ihrem Vorderende an einem mit der ersten Achse 1 fest
verbundenen Achsbock 24 gelenkig verbunden. An ihrem Hinterende ist die Achsfeder 2 der mittleren Achse 3 über das
Federauge 5 und das Gehäuse 20 angebracht. An dem an dem
Fahrzeugrahmen befestigten Haltebock 11, an welchem die
Ausgleichsschwinge 7, unsymmetrisch eingespannt, mittels des
Lagergehäuses 9 gehalten ist, ist auch das Hinterende des
längenverstellbaren Achslenkers 6 gelenkig angebracht. Das
Vorderende des Achslenkers 6 ist an dem Achsbock 24 gelenkig
befestigt. Die hintere Ausgleichsschwinge 8 ist mit ihrem
Hinterende an einem an der letzten Achse 4 angebrachten Achsbock 5 gelenkig befestigt. Das Vorderende der hinteren Ausgleichsschwinge 8 trägt das Gehäuse 21 zur Aufnahme des
Hinterendes der Achsfeder 2 der mittleren Achse 3. Entsprechend dem verlängerbaren Achslenker 6 an der ersten Achse 1
ist auch ein verlängerbarer Achslenker 6 mit seinem Vorderende am unteren Ende des Haltebockes 12 und mit seinem Hinterende am unteren Ende des Achsbockes 25 gelenkig befestigt.

Die Ausgleichsschwingen 7 und 8 sind auch hier wieder zwischen Gleitplatten 13 der Halteböcke 11 und 12 aufgenommen.

Bezugszeichenliste:

1   Achse

2   Achsfeder

3   Achse

4   Achse

5   Federauge

6   Achslenker

7   Ausgleichsschwinge

8   Ausgleichsschwinge

9   Lagergehäuse

10  Lagergehäuse

11  Haltebock

13  Gleitplatte

14  Scheuerbleche

15  Federauflage

16  Federauflage

17  Bolzen

18  Bolzen

19  Gehäuse

20  Gehäuse

21  Gehäuse

22  Gehäuse

23  Einspannvorrichtung

24  Achsbock

25  Achsbock

0114992

KEIL&SCHAAFHAUSEN
PATENTANWÄLTE

S 19 P 57 EP

Frankfurt am Main

12.12. 1983

Otto Sauer Achsenfabrik Keilberg

8751 Bessenbach-Keilberg

Mehrachsaggregat für Fahrzeuge

Patentansprüche:

1. Mehrachsaggregat für Fahrzeuge mit einer Verbindung von mindestens zwei Achsen in Form einer Ausgleichsschwinge für den statischen und dynamischen Achsausgleich sowie zum Bremsausgleich, dadurch gekennzeichnet, daß die Ausgleichsschwinge (7, 8) nachgiebig federnd ausgebildet ist.

2. Mehrachsaggregat nach Anspruch 1, dadurch gekennzeichnet, daß die jeweilige Ausgleichsschwinge (7, 8) in an sich bekannter Weise entweder die Vorderenden oder die Hinterenden der Achsfedern (2) benachbarter Achsen (1, 3, 4) miteinander verbindet.

3. Mehrachsaggregat nach Anspruch 1 oder 2, dadurch gekennzeichnet, daß bei einem Dreiachsaggregat eine Ausgleichsschwinge (7) das Vorderende der Achsfeder (2) der vorderen Achse (1) mit dem Vorderende der Achsfeder (2) der mittleren Achse (3) und eine Ausgleichsschwinge (8) das Hinterende der Achsfeder (2) der mittleren Achse (3) mit dem Hinterende der Achsfeder (2) der hinteren Achse (4) verbindet (Fig. 3 bis 5).

4. Mehrachsaggregat nach einem der Ansprüche 1 bis 3, dadurch gekennzeichnet, daß die jeweilige Ausgleichsschwinge (7, 8) in einem an dem Fahrzeugrahmen befestigbaren Haltebock (11, 12) der Achsfeder (2) symmetrisch oder unsymmetrisch eingespannt ist.

5. Mehrachsaggregat nach einem der Ansprüche 1 bis 4, dadurch gekennzeichnet, daß die Achsführung über die Vorderenden der jeweiligen Achsfeder (2) mit Federaugen (5) erfolgt.

6. Mehrachsaggregat nach einem der Ansprüche 1 bis 4, dadurch gekennzeichnet, daß die Achsführung über die Vorderenden der Achsfedern (2) und gesonderte Achslenker (6) erfolgt (Fig. 5 ).

7. Mehrachsaggregat nach einem der Ansprüche 1 bis 6, dadurch gekennzeichnet, daß der jeweilige Haltebock (11, 12) ein Ende einer Achsfeder (2) aufnimmt und gegebenenfalls unterhalb der Achsfeder (2) ein Bolzen (17, 18) als Fangvorrichtung vorgesehen ist.

8. Mehrachsaggregat nach Anspruch 1, 4 oder 6, dadurch gekennzeichnet, daß bei einem Zweiachsaggregat die Ausgleichsschwinge (7) mit ihrem Vorderende an einem mit der vorderen Achse (1) verbundenen Achsbock (24) und mit ihrem Hinterende an dem Vorderende der Achsfeder (2) der hinteren Achse (3) angelenkt und daß zwischen Achsbock (24) und einem an dem Fahrzeugrahmen befestigbaren Haltebock (11) ein gegebenenfalls längsverstellbarer Achslenker (6) angeordnet ist (Fig. 6).

9. Mehrachsaggregat nach einem der Ansprüche 1, 4 oder 6, dadurch gekennzeichnet, daß bei einem Dreiachsaggregat die vordere Ausgleichsschwinge (7) mit ihrem Vorderende an einem mit der vorderen Achse (1) verbundenen Achsbock (24) und mit ihrem Hinterende an dem Vorderende der Achsfeder (2) der
mittleren Achse (3) angelenkt ist, daß die hintere Ausgleichsschwinge (8) mit ihrem Vorderende an der Achsfeder (2) der
mittleren Achse (3) und mit ihrem Hinterende an einem mit der
hinteren Achse (4) verbundenen Achsbock (25) angelenkt ist
und daß zwischen den jeweiligen Achsböcken (24, 25) und je
einem an dem Fahrzeugrahmen befestigbaren Haltebock (11, 12)
ein gegebenenfalls längsverstellbarer Achslenker (6) angeordnet ist (Fig. 6, 7).

10. Mehrachsaggregat nach einem der Ansprüche 1 bis 9, dadurch gekennzeichnet, daß der jeweilige Haltebock (11, 12)
beidseitig der jeweiligen Ausgleichsschwinge (7, 8) Gleitplatten (13) zur Aufnahme von Seitenkräften aufweist.

11. Mehrachsaggregat nach einem der Ansprüche 1 bis 10,
dadurch gekennzeichnet, daß die jeweilige Ausgleichsschwinge
(7, 8) im Abstand von dem jeweiligen Haltebock (11, 12)
zwischen Scheuerplatten (14) zur Aufnahme von Seitenkräften
aufgenommen ist (Fig. 3).

12. Mehrachsaggregat nach einem der Ansprüche 1 bis 11,
dadurch gekennzeichnet, daß die Ausgleichsschwingen (7, 8)
über Gehäuse (19, 20, 21, 22) mit den betreffenden Enden der
Achsfeder(n) (2) verbunden sind.

13. Mehrachsaggregat nach einem der Ansprüche 1 bis 12,
dadurch gekennzeichnet, daß die Achsfeder(n) (2) unter den
Achsen (1, 3, 4) angeordnet ist (sind).

0114992

## FIG.1

Fahrtrichtung

## FIG.2

Fahrtrichtung

S 19 P 57

FIG.3

19 5 14 7 9 11 13 20 21 5 8 13 10 12 14 22

2 17 15 1 23 2 3 23 16 18 2 4 23

Fahrtrichtung

FIG.5

19 7 9 13 11 20 21 8 13 10 12 22

2 6 1 17 15 23 6 3 23 16 18 4 23

Fahrtrichtung

# FIG. 4

Fahrtrichtung

0314992

# FIG. 6

Fahrtrichtung

4/5

0114992

# FIG.7

Fahrtrichtung

0114992